# EUROPEAN PATENT SPECIFICATION

(11) **EP 3 595 820 B1**
(45) Date of publication and mention of the grant of the patent: **14.08.2024**
(21) Application number: 18723044.6
(22) Date of filing: 15.03.2018
(51) Int. Cl.: B09B 3/00, C02F 1/02, C02F 11/18

(54) **HYGIENISATION UNIT AND METHOD FOR HYGIENISING RAW MATERIAL FED TO A BIOGAS REACTOR**
HYGIENISIERUNGSEINHEIT UND VERFAHREN ZUR HYGIENISIERUNG VON EINEM BIOGASREAKTOR ZUGEFÜHRTEM ROHSTOFF
UNITÉ D'HYGIÉNISATION ET PROCÉDÉ D'HYGIÉNISATION DE MATIÈRE PREMIÈRE INTRODUITE DANS UN RÉACTEUR À BIOGAZ

(30) Priority: 15.03.2017 FI 20175233; 17.11.2017 FI 20176030
(43) Date of publication of application: 22.01.2020
(73) Proprietor: Bioall International Greentech Co., Limited, Mongkok, Kowloon (HK)
(72) Inventor: LEHTOMÄKI, Annimari, 41900 Petäjävesi (FI); RAUTIAINEN, Mika, 41310 Leppävesi (FI)
(74) Representative: Kespat Oy
(86) International application number: PCT/FI2018/050190
(87) International publication number: WO 2018/167370

(56) References cited:
- WO-A1-2009/121873
- WO-A1-2013/011447
- FR-A1- 3 003 558
- US-A- 4 028 242
- US-A1- 2009 050 134

## Description

The invention is related to a hygienisation unit for hygienising raw material fed to a biogas reactor, the hygienisation unit including
- a delimited space for suppliable high solids content raw material,
- feed equipment arranged in the vicinity of the space for feeding suppliable raw material to the space, the feed equipment including a pump for feeding raw material, a gate valve arranged between the pump and the space for preventing the return flow of raw material and a second gate valve arranged at the end of the delimited space in the direction of motion of raw material for closing the delimited space to increase pressure,
- heating equipment arranged outside the pipe (20) for heating raw material inside the pipe (20) by the effect of heat transferred through the pipe (20),
- measuring equipment for measuring the temperature and pressure of raw material contained in the space and for calculating the raw material dwell time as well as controlling the heating equipment to achieve the temperature required by hygienisation, and
- control equipment arranged to control said feed equipment and heating equipment for adjusting the raw material dwell time and the hygienisation temperature suitable in terms of the duration of hygienisation or pressure sterilisation for hygienising raw material based on the measurement of the measuring equipment. The invention is also related to a method for hygienising raw material fed to a biogas reactor in the hygienisation unit.

In biogas production, several different raw materials can be used, which can include household biowaste, agricultural waste or other equivalent material. In accordance with the European Parliament regulation (EC) No. 1774/2002 concerning animal by-products, all animal by-products used for biogas production must be hygienised by treating by-products thermally at 70°C for a minimum of an hour before transferring them to a digestion container. Except for plant-based agricultural waste, almost all by-products applicable in the context of biogas product ion must be subjected to this process .

A process for treating organic waste proposed in publication WO 2004/076082 A1 is known as prior art, wherein suppliable animal-based raw material is hygienised in a batch processing hygienisation unit. However, such a batch processing hygienisation unit is relatively poorly suitable for processing a high solids content raw material because of the challenges related to its supply to and removal from a batch processing container serving as the hygienisation unit.

WO 2013011447 A1 relates to a method for carrying out the continuous hydrolysis of organic matter, in particular sludge produced during water treatment, in order to provide organic matter which has been rendered hygienic and which can be easily digested and dehydrated, said method including the following steps: pumping the matter to be treated so as to carry out the pressurised injection thereof into a treatment circuit comprising a hydrolysis reactor; heating the matter prior to said matter entering the reactor; hydrolysis in the reactor; decompressing the hydrolysed matter prior to the discharge thereof, and discharging the hydrolysed matter, wherein the heating of the sludge involves a heat exchanger between the sludge and the fumes from combustion or incineration, and the reactor being a plug flow reactor that is placed in a recirculation loop formed with the heat exchanger between the sludge and the fumes.

WO 2009121873 A1 relates to a method for performing continuous thermal hydrolysis of sludge by feeding the sludge into a tube reactor subsequently elevating the temperature and pressure in the reactor. The sludge is cooled by introducing water into the sludge instead of cooling the sludge with a heat exchanger or a similar unit.

FR 3003558 A1 relates to a process, and associated device, for the continuous thermal hydrolysis of sludge containing organic matter, said process comprising the steps consisting in: simultaneously injecting pressurized steam into said sludge and mixing said sludge with said steam by means of a dynamic injector-mixer so as to obtain a single-phase mixture, conveying said single-phase mixture to a tubular reactor under pressure and causing the flow in plug flow of this mixture in said reactor according to a sufficient residence time and at a sufficient temperature to allow thermal hydrolysis of the organic matter present in said sludge, cooling said single-phase mixture on leaving said tubular reactor to a temperature allowing subsequent digestion of the hydrolyzed organic matter which it contains and depressurizing said cooled single-phase mixture.

US 2009050134 A1 relates to a method for treating biomass was developed that uses an apparatus which moves a biomass and dilute aqueous ammonia mixture through reaction chambers without compaction. The apparatus moves the biomass using a non-compressing piston. The resulting treated biomass is saccharified to produce fermentable sugars.

US 4028242 A relates to a method wherein sewage is heated to a temperature above 100 °C in two steps. In the first step, sewage is heated to a temperature not greater 100 °C and then conducted into the nozzle of a jet apparatus into which heat-carrier steam is also injected so that the sewage is therein heated to a temperature greater than 100 °C, which constitutes the second step of heating. The sewage heated to said temperature is maintained in a continuous flow while being discharged from the jet apparatus, the pressure in the continuous flow corresponding to the steam saturation temperature.

An object of the invention is to provide a continuously operating hygienisation unit that is better than prior art hygienisation units. The characteristic features of this invention are set forth in the appended claim 1. An object of the invention is to provide a method that is better than prior art methods for hygienising raw material in a continuously operating process. The characteristic features of this invention are set forth in the appended claim 10.

This object can be achieved with a continuously operating hygienisation unit for hygienising or pressure sterilising raw material that contains organic material and is fed to a biogas reactor, said hygienisation unit being continuously operating and including a delimited space for the suppliable high solids content raw material, this delimited space being a pressure resistant tortuous continuous pipe. In addition, the hygienisation unit includes feed equipment arranged in the vicinity of the space for feeding suppliable raw material to the space, the feed equipment including a piston pump for feeding raw material, heating equipment arranged in the vicinity of the space outside the pipe for heating raw material inside the pipe by the effect of heat transferred through the pipe, as well as measuring equipment for measuring the temperature and pressure of the raw material contained in the space. In addition, the hygienisation unit includes control equipment arranged to control said feed equipment and heating equipment for adjusting the raw material dwell time and hygienisation temperature sufficient in terms of the duration of hygienisation or pressure sterilisation for hygienising raw material based on the measurement completed by the measuring equipment.

In a hygienisation unit according to the invention, a high solids content raw material (dry solids content 20-40%) can be supplied and discharged using the same feed equipment, because the raw material fed to the pipe pushes the raw material forward in front of it as plug flow while removing the raw material hygienised from the other end of the pipe. At the same time, the dwell time required for hygienisation is easy to realise by controlling the feeding power of the feed equipment based on the measurement of the measuring equipment. In addition, by utilising the pipe as a delimited space, the temperature of the raw material can be easily verified by taking temperature measurements at least in two different positions in the pipe. The stock fed passes through the hygienisation space at the feed pressure. The heating and hygienisation time of the stock to be hygienised can be adjusted at the feed speed. In other words, in a hygienisation unit according to the invention, hygienisation can be performed without a chemical reaction.

Using a piston pump, the space in the hygienisation unit is supplied with raw material in a notably high solids content, the feeding of which would be difficult with a feed screw, for example. A piston pump also enables pressurisation of the stock to be hygienised, if sterilisation of the stock supplied is desired. The piston pump can be fed through a funnel with a feed screw, for example, from a feed tank to the piston pump.

The feed equipment includes a gate valve arranged between the piston pump and the space for preventing the return flow of raw material. In this way, return of the raw material already pumped towards the piston pump is prevented thanks to the pressure existing in the space.

Advantageously, the control equipment is arranged to keep the temperature of the raw material in the delimited space between 60°C and 160°C and pressure between 0.5 bar and 10 bar, preferably at 70°C at 1 bar pressure or at 133°C at 3 bar pressure. Thus, the temperature is sufficiently high in terms of hygienisation or pressure sterilisation but, on the other hand, energy is not wasted by excessive heating.

The hygienisation unit includes a second gate valve arranged at the end of the delimited space in the direction of motion of raw material for closing the delimited space for increasing pressure. Thus, the piston pump can push raw material to the delimited space against the second gate valve increasing the pressure existing in the delimited space.

Advantageously, the pipe includes curved sections for reducing the space requirement of the pipe, and straight sections, in the vicinity of which heating equipment is arranged. Thus, the size of the hygienisation unit can be kept moderate and the hygienisation unit can be arranged in quite a small space, although the length of the pipe itself is as much as 100 m. Furthermore, it is notably easier to arrange the heating equipment in the vicinity of straight sections than in the vicinity of curved sections.

According to an embodiment, the hygienisation piping can be equipped with a pre-heating section and a post-hygienisation cooling section, which would be integrated in the hygienisation system. The heating circuits of the pre-heating and cooling sections are connected to each other with fluid circulations of their own. This saves energy required for heating as well as allows a better control of reactor temperatures . This is useful particularly when operating biogas reactors in a mesophilic temperature range (35°C - 40°C) .

The measuring equipment can include at least a first temperature sensor for ensuring a sufficient raw material temperature between the ends included in the pipe, and a second temperature sensor for verifying the temperature of raw material discharged from the pipe. In this way, at least two measurement points are provided, wherein the temperature of raw material to be hygienised is adequately high in terms of hygienisation. When the speed of advancement of raw material in the pipe is known, the dwell time can be inferred and successful hygienisation can be ensured.

The piston pump is arranged to feed raw material in a solids content of at least 15% - 35%, preferably 25% - 30%. This is a normal solids content for raw material, or the solids content of raw material after discharging easily dischargeable fluid from it with a press, for example.

The diameter of the pipe can be in the range of 200 mm - 400 mm, preferably 250 mm - 300 mm, and the length in the range of 20 m - 100 m, preferably 75 m - 85 m. Thus, a sufficiently high capacity can be provided in the pipe for a biogas reactor using a moderate length.

According to an embodiment, the pipe includes at least one discharge connection for removing liquid from the raw material and vacuum means for generating a vacuum in the discharge connection for removing liquid and nitrogen contained therein from the raw material as vapour. With nitrogen removal, it is possible to avoid toxification of microbes contained in the biogas reactor, which is caused by nitrogen. At the same time, it is possible to adjust the ratio of carbon and oxygen in the raw material supplied to the biogas reactor, which is significant for biogas production. Furthermore, the volume occupied by discharged nitrogen and liquid becomes free for the raw material enabling a greater amount of raw material to be fed to the biogas reactor to improve the capacity of the biogas reactor. Removed nitrogen is a concentrate that can be used as a fertiliser.

According to an embodiment, the hygienisation unit includes a feed connection for feeding a base into the pipe in order to enhance separation of nitrogen by increasing the pH of raw material. With the base, nitrogen is more efficiently separated from the raw material into the liquid in a higher pH.

The hygienisation unit may include vacuum equipment arranged to generate a vacuum of 0.5 bar - 1.0 bar, preferably 0.7 bar - 0.8 bar, in the discharge connection. Thus, the liquid can be made to vaporise at the temperature applied in hygienisation without an additional temperature increase.

According to an embodiment, the piping may also include a pressure connection, via which it is possible to generate an overpressure in the pipe. In turn, this enables sterilisation of raw material, if the temperature is increased up to 133°C and the pressure is raised to an overpressure of 3 bar. With sterilisation, it is possible to kill pathogens in the raw material, which are not yet killed in hygienisation conditions. To increase pressure, it is also possible to utilise the feed pump pressure by closing the discharge valve of the hygienisation unit and increasing pressure against it. The discharge valve will be opened, once the required dwell time is achieved.

Raw material fed to the delimited space in a high solids content already in advance resists to the supply of new raw material and is partly compressed during the thrust of the piston pump. The gate valve prevents the raw material from returning back during the return stroke of the piston pump as the raw material returns to its uncompressed volume.

Advantageously, the hygienisation unit further includes control logics for timing the actions of the piston pump and the gate valve relative to each other. In this way, the gate valve can be used to close the pipe during the return stroke of the piston. When the piston of the piston pump starts a new forward thrust, the gate valve opens and new raw material can be pushed into the delimited space, i.e., the pipe.

Advantageously, the heat exchangers used as the heating equipment are tube heat exchangers, which use hot oil as the heat transfer medium.

Advantageously, the heating equipment includes several heat exchangers uniformly located over the pipe length. In this way, heat transfer is efficient in the entire hygienisation unit and a correct temperature in terms of hygienisation can be ensured over the entire pipe length.

The heating equipment may cover 50% - 80% of the total length of the pipe. Thus, heat transfer can be made sufficiently efficient over the entire pipe length and the raw material to be hygienised remains at an adequately high temperature over the entire pipe length.

The hygienisation unit includes one piston pump only. Thus, the same piston pump pushes the material to be hygienised through the pipe over the entire pipe length.

The capacity of the piston pump is advantageously in the range of 2, 000 l/min - 20, 000 l/min. This provides sufficient production capacity.

The object of the method according to the invention can be achieved with a method for hygienising raw material fed to a biogas reactor in continuous operation in a hygienisation unit, wherein a raw material is fed to a delimited space with feed equipment using a piston pump, the raw material is heated in the space from the outside of the pipe for increasing the raw material temperature by transferring heat through the pipe into the raw material with heating equipment, and the temperature and pressure of the raw material existing in the space are measured with measuring equipment and the dwell time of the raw material is calculated for controlling the heating equipment to achieve the temperature required in hygienisation. In addition, in the method, the feed equipment is controlled with control equipment for adjusting the raw material dwell time sufficient in terms of the duration of hygienisation or sterilisation for hygienising raw material based on the measurement of the measuring equipment, and raw material is continuously removed from the delimited space of the hygienisation unit.

In such a method, the feeding power of the feed equipment allows regulation of the raw material dwell time within the pipe and thereby confirmation of successful hygienisation. When using a piston pump, raw material can be fed in a high solids content; therefore, a smaller amount of liquid enters the space.

In the method, the return flow of raw material is prevented with a gate valve arranged between the piston pump and the space. In this way, it is possible to prevent raw material from returning back due to the effect of pressure possibly existing in the delimited space. This improves the efficiency of hygienisation.

Raw material is fed in a solids content of 15% - 35%, preferably 25% - 30%. Thus, an amount as small as possible of liquid is heated in the hygienisation unit and the solids content for biogas production is maximised in the hygienisation unit.

In the method, a base is advantageously fed into raw material for raising the pH of the raw material to separate nitrogen from the raw material into the liquid, and nitrogen-containing liquid is aspirated from the pipe as liquid or vapour using a vacuum. In this way, it is possible to separate an adequate amount of nitrogen from the raw material for adjusting the carbon/nitrogen ratio of the raw material. Removed nitrogen can be sold as a fertiliser, for example.

Advantageously, a vacuum of 0.5 bar - 10 bar, preferably 0.7 bar - 0.8 bar, is used in nitrogen removal to enable removal of the liquid contained in the pipe and nitrogen separated into it from the pipe as vapour via the discharge connection. Removal of a liquid as vapour is the most efficient method for removing a liquid from raw material.

According to an embodiment, oil is removed clean or as an emulsion from an input removed as a liquid.

In the method, it is possible to feed an enzyme into the raw material for disintegrating lignin contained in the raw material or for otherwise changing the properties of the input. Thus, heat required for the hygienisation of the process can also be utilised in an enzymatic pre-treatment, with which it is possible to process, for example, a lignin-containing raw material to produce raw material that is better suited to biogas production. The enzyme cancels lignin's effect of protecting straw, for example, against microbes by disintegrating lignin, thus allowing straw, too, to be used for biogas production.

The enzyme supplied is advantageously laccase. Laccase action is well known prior art for disintegrating lignin.

In the method, raw material can be fed with a piston pump in a solids content of 15% - 35%, preferably 25% - 30%. Thus, the quantity of water to be transferred remains notably smaller compared to raw material with a high water content.

In the method, the operation of the piston pump and the gate valve is advantageously controlled with a logic unit for timing the operation of the piston pump and the gate valve relative to each other. In this way, the operation of the gate valve can be timed in such a way that it closes the pipe upon the return stroke of the piston of the piston pump and opens the pipe upon the forward stroke of the piston.

The delimited space is closed in the direction of motion of raw material until to the end of the delimited space with a second gate valve for increasing pressure. Thus, the piston pump can be used to increase pressure by feeding raw material into the delimited space against the second gate valve.

In the method, raw material can be heated up to a temperature ranging between 60°C - 160°C, and pressure is increased to 0.5 bar - 10 bar, preferably to a temperature of 70°C and to a pressure of 1 bar or to a temperature of 133°C and at a pressure of 3 bar.

A hygienisation unit and method according to the invention are used in the context of a continuously operating biogas reactor.

The invention is described below in detail by making reference to the appended drawings that illustrate some of the embodiments of the invention, in which:
- Figure 1: is a simplified view of the process diagram of an embodiment of the hygienisation unit,
- Figure 2: is a partial PI diagram of an embodiment of the hygienisation unit according to the invention, when biomass is used as the raw material,
- Figure 3: is a partial PI diagram of an embodiment of the hygienisation unit according to the invention, when slurry is used as the raw material,
- Figure 4a: is a cross-sectional lateral view of the piston pump and the gate valve used in an embodiment of the hygienisation unit according to the invention,
- Figure 4b: is a front view of the piston pump and the gate valve used in an embodiment of the hygienisation unit according to the invention,

The hygienisation unit and method according to the invention are described below mainly referring to hygienisation; however, it is obvious to those skilled in the art that corresponding steps will also be realised in the case of pressure sterilisation.

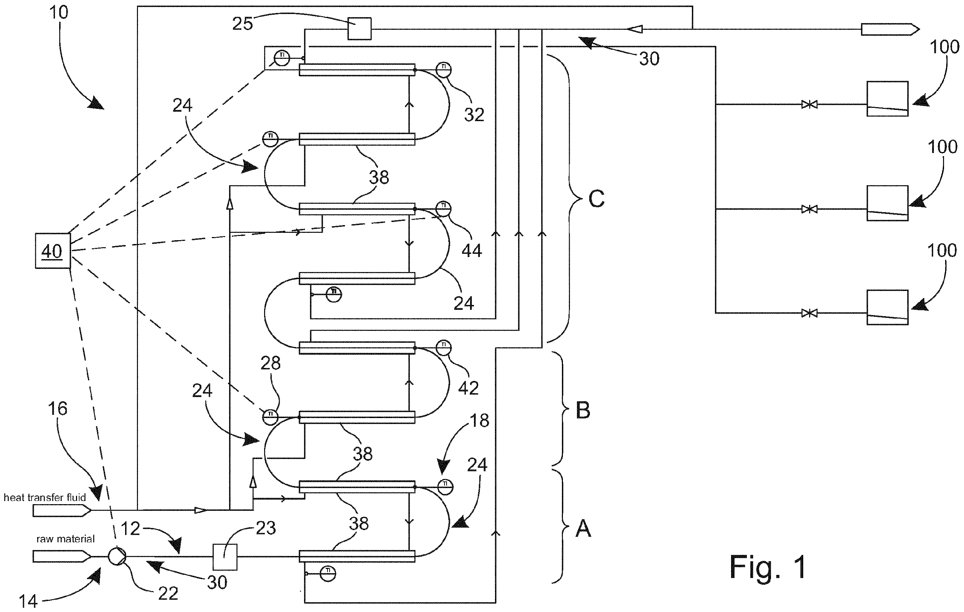

According to Figure 1, a hygienisation unit 10 according to the invention is used for eliminating pathogens contained in raw material before biogas reactors 100 by means of hygienisation. In this context, hygienisation means hygienisation in accordance with the EC regulation referred to above in this application or pressure sterilisation wherein the temperature of raw material fed to the hygienisation unit 10 is increased to at least 70°C for a minimum of an hour in the case of hygienisation and to 133°C for a minimum of 20 minutes and at a pressure of 3 barg in the case of pressure sterilisation. In the embodiment of Figure 1, the hygienisation unit 10 supplies hygienised raw material to three different biogas reactors 100. Several hygienisation units can be located in parallel and, in different applications, in series as well.

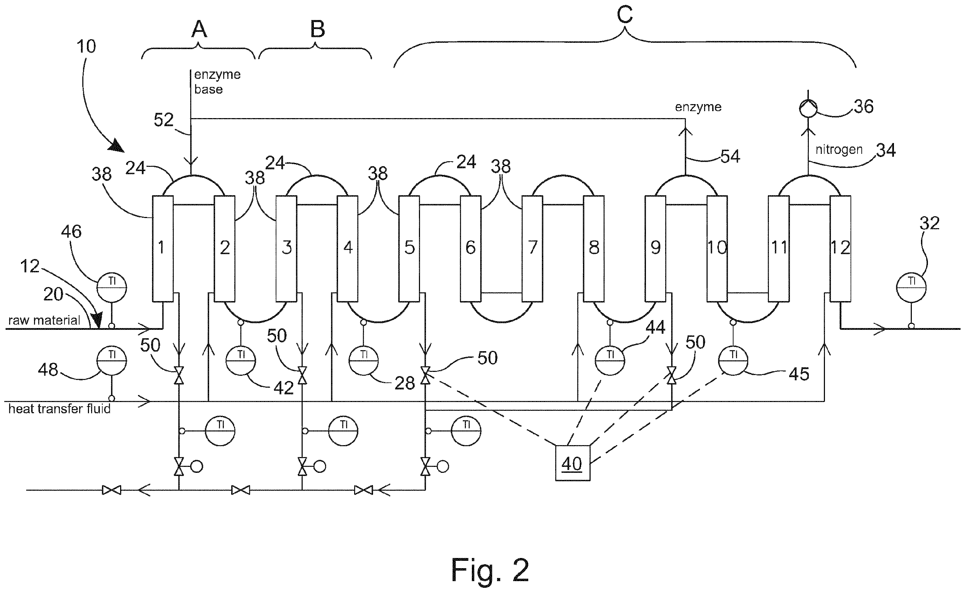

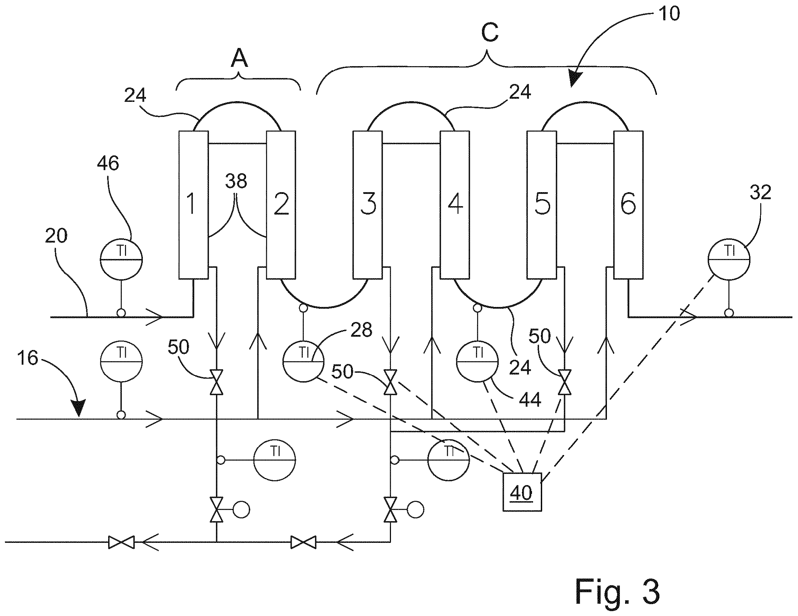

In this embodiment, a continuous pipe 20 forming a space 12 for raw material comprises straight sections 26 and curved sections 24. Curved sections 24 are advantageously curves of 180°, in which case the flow direction of raw material alternates back and forth in the hygienisation unit 10. This enables arrangement of a notably long pipe 20 length in a relatively small space. For example, the diameter of the pipe can be in the range of 200 mm - 400 mm, preferably 250 mm - 300 mm, and the length in the range of 60 m - 100 m, preferably 75 m - 85 m. The radius of curvature of the curved sections can be in the range of 0.6 m - 4 m, for example, which can be achieved by bending the pipe or by using pre-fabricated curves. In this context, when speaking of a continuous pipe, it is meant that straight sections and curved sections form a continuous channel, which serves as the hygienisation space. However, a continuous pipe is advantageously provided by connecting curved sections and straight sections by welding to form a complete whole. The number of curved sections and straight sections depends on the raw material to be hygienised, since raw materials with different compositions heat up with a different amount of energy. Thus, a shorter hygienisation unit 10 according to Figure 3 can be used for slurry, which contains more water, compared to biowaste, for example, according to Figure 2. This is because the water in slurry heats up faster than the dry matter in biowaste. Although the hygienisation unit 10 includes one single pipe 20 in Figures 1 - 3, it is obvious to those skilled in the art that the capacity of the hygienisation unit can be increased by placing several pipes in parallel to achieve the necessary capacity.

According to Figure 1, the hygienisation unit 10 includes heating equipment 16, which in this embodiment consists of a fluid circulation heater. Advantageously, a heat exchanger 38 within which a heating fluid circulates is arranged in the vicinity of the straight section 26 of each pipe formed around straight section of the pipe 20. At its simplest, the heat exchanger can be a container shell, within which a heat transfer fluid is circulated. The heat transfer fluid can be water, but it can also be heat transfer oil or equivalent. A heat transfer fluid can be heated in a heat source, such as a combustion boiler, if the hygienisation unit and the biogas reactor are located in the vicinity of a combustion boiler meant for combustion of inorganic waste. Advantageously, the temperature of the heat transfer fluid is in the range of 60°C - 200°C. According to Figure 1, the heat transfer fluid can be circulated, for example, through two heat exchangers depending on the inlet temperature of the heat transfer fluid. For example, in the embodiment of Figure 1, the inlet temperature of the heat transfer fluid may be 300°C and it can therefore be used in pressure sterilisation.

The hygienisation unit 10 includes feed equipment 14, with which raw material is pushed into the pipe 20 from one end 30 of the pipe 20. The feed equipment 14 includes a piston pump 22, with which a high solids content raw material can be supplied. Raw material can be fed to the piston pump using a feed funnel or a screw conveyor, for example. The output provided by the piston pump is also sufficiently high in order to push forward the entire plug of the raw material accumulated in the pipe with each push . Advantageously, the piston pump works relatively slowly enabling its low kinetic energy to generate a great force by which as high a pressure as 30 bar can easily be achieved. The cylinder diameter of the piston pump may be in the range of 300 mm - 400 mm, for example . In addition, the feed equipment includes a gate valve 23, which is used to prevent raw material from returning back in the direction of motion of the raw material due to a pressure possibly existing in the delimited space. In the hygienisation unit according to the invention, both the supply and discharge of raw material are performed with one piece of feed equipment 14, since the raw material hygienised is automatically removed from the pipe, as the new raw material plug coming from behind pushes it forward by the movement of the feed equipment.

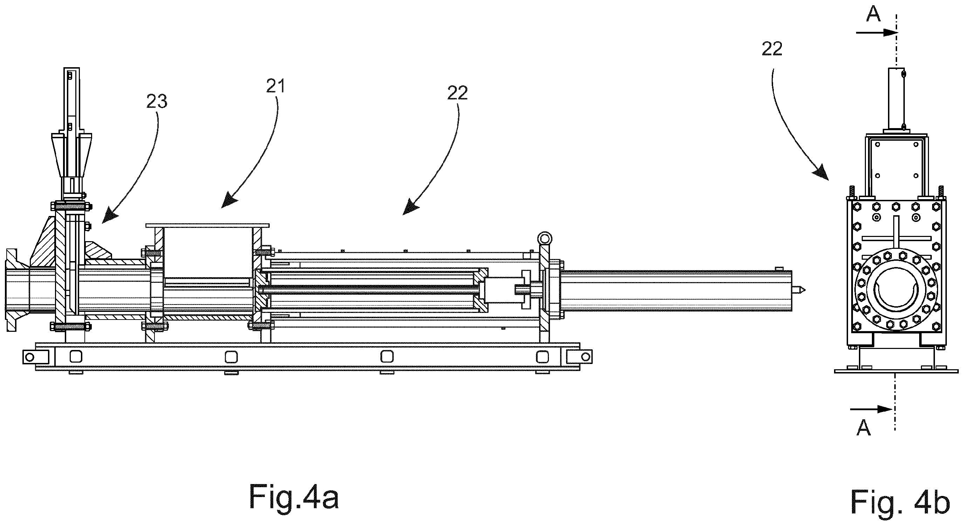

The piston pump 22 applied can be, for example, a piston pump 22 depicted in Figures 4a and 4b having a gate valve 23 advantageously integrated in the vicinity of it. Reference number 21 in the figure depicts the inlet opening. The combination of a piston pump and a gate valve can be, for example, SID Kolbenpumpe TYP STPP (Single Tubular Piston Pump) manufactured by German SID Deutschland GmbH. In addition, the hygienisation unit 10 also includes a second gate valve 25 depicted in Figure 1, which is located towards the end of the delimited space 12 before the discharge connection 34. The second gate valve 25 can be controlled, in the same way as the gate valve 23, with the control equipment 40. The second gate valve 25 is advantageously closed when it is desired to generate an overpressure in the delimited space 12 by pumping raw material to the delimited space 12 with the piston pump 22, thus increasing pressure in the delimited space 12.

The control equipment 40 is arranged to control the piston pump 22 and the gate valve 23 alternately in such a way that the gate valve 23 remains in its open position always during the forward thrust of the piston pump 22, until the piston of the piston pump 22 returns to its initial position past the gate valve 23. Then the gate valve 23 closes and the raw material pushed past the gate valve 23 cannot move backwards in the direction of motion towards the piston pump 22. After feeding raw material again in front of the piston of the piston pump 22, the gate valve 23 can be opened just before the forward thrust of the piston pump 22. The second gate valve 25 can be closed before starting to use the piston pump 22, if it is desired to increase the pressure in the delimited space 12 for sterilisation.

For controlling the feed equipment 14 and the heating equipment 16, the hygienisation unit 10 also includes control equipment 40 as well as measuring equipment 18, which is used to measure the temperature of raw material inside the pipe. Advantageously, the measuring equipment includes at least a first temperature sensor 28 and a second temperature sensor 32, of which the first temperature sensor 28 measures the raw material temperature at a point where the raw material temperature is assumed to be 70°C required by hygienisation or 133°C required by sterilisation. In turn, the second temperature sensor 32 measures the raw material temperature near the raw material outlet in the pipe . Based on these measurements, the control equipment 40 controls the operation of the feed equipment 14 and the heating equipment in such a way that a sufficient dwell time and temperature are achieved for the raw material.

Figure 2 shows a hygienisation unit 10, which is meant for hygienisation of biomass used as the raw material. In this embodiment, biomass is heated in three zones, wherein the temperature of the raw material is heated up to approximately 70°C in the first zone A. In the first zone, where the temperature increase is approximately in the range of 45°C - 70°Cdepending on the initial temperature of the raw material, the same heat transfer fluid flow is circulated in two heat exchangers in such a way that a hot heat transfer fluid is supplied to the heat exchanger 38 posterior in the flow direction and is circulated from there to the preceding heat exchanger 38 according to the countercurrent principle. Thus, the hottest heat transfer fluid is always used to heat the warmer raw material thereby keeping a sufficiently great temperature difference between the heat transfer fluid and the raw material to be heated for achieving efficient heat transfer. For example, the temperature of the heat transfer fluid at the inlet of the heat exchanger may be 110°C

After the first zone A, the temperature of the raw material is advantageously measured with a third temperature sensor 42. The third temperature sensor 42 is not mandatory in terms of implementation of the invention. In the second zone B, the temperature is adjusted to 75°C. In the second zone B, the heat transfer fluid flow is first supplied to the posterior heat exchanger 38 and then circulated from there to the preceding heat exchanger.

The first temperature sensor 28, which ensures that the temperature of the raw material rises to a sufficiently high value, is located at the end of the second zone B. Advantageously, it is preferred to keep the temperature at a slightly higher value than 70°C required by hygienisation to ensure that the temperature always exceeds 70°C.

In the third zone C, raw material is kept at a temperature of 75°C for the desired hygienisation time, i.e., at least for 60 minutes. As no temperature increase takes place in the third zone C, the heat transfer fluid can be circulated in four successive heat exchangers 38. The temperature can be monitored in the middle of the third zone B with a fourth temperature sensor 44. When the raw material is removed from the third zone C, the temperature is measured with the second temperature sensor 32. This measurement ensures that hygienisation has taken place at a sufficiently high temperature. In addition, the measuring equipment 18 can also include a fifth temperature sensor 46, which is used to measure the temperature of the raw material arriving to the first zone A before hygienisation.

Advantageously, the measuring equipment includes a sixth temperature sensor 48, which is used to measure the temperature of the heat transfer fluid of the heating equipment and, in turn, the heating equipment 16 includes control valves 50 for controlling the flow of the heat transfer fluid. The temperature of the heat transfer fluid removed from zones A, B, C is measured and, if the temperature must be increased or decreased in the zone concerned, the control valve 50 of the zone can be opened or closed according to the control curve by using the control equipment 40. If the hygienisation unit is used for pressure sterilisation, a pressure sensor is also connected to it to ensure achievement of the sufficient 3 bar pressure.

The control equipment 40 of the hygienisation unit may consist of a computer-based logic system, which is connected, using a field bus, for example, to the control valves 50 of the heating equipment 16, the feed equipment 14 and the measuring equipment 18. The logic system is programmed to store and monitor data transferred along the field bus and to control the hygienisation unit automatically or via a user intervention based on this information.

The principle of the control is described below related to the embodiment of Figure 2. In the embodiment according to Figure 2, the third temperature sensor 42 is used to monitor the increase in the raw material temperature generated during the first zone A. If the temperature increase is too small, the control valve 50 is opened 50 and more heat transfer fluid is supplied to the first zone A in order that the raw material temperature is higher and closer to the target temperature 70°C at the end of zone A. On the other hand, if the temperature measured with the third temperature sensor 42 is 85°C, the control valve 50 is throttled so that less heat transfer fluid is conveyed to the heat exchangers 38 of the first zone A. At the same time, based on the measurement by the third temperature sensor 42, the control valve of the second zone B is also adjusted to achieve a temperature that is sufficiently high but not too high, which would result in inappropriate use of heating energy.

At the end of the second zone B, the first temperature sensor 28 is used to measure the raw material temperature and it is ensured that the raw material temperature definitely exceeds 70°C required by hygienisation. However, if this is not the case, the control equipment 40 stops the feed equipment 14 and the temperature of the second zone B is increased by opening the control valve 50. Once the temperature has achieved at least 75°C, the feed equipment 14 is started again and the raw material advances again in the pipe 20. The supply speed of the feed equipment 14 is controlled with the control equipment 40 in such a way that the dwell time of raw material in the third zone C is at least 60 minutes. If the temperature measured by the second temperature sensor is below the value required by hygienisation, the feed equipment 14 is stopped again and the control valve 50 of the third zone C is opened to increase the temperature to a sufficient level. Then the rawmaterial must be allowed to stand for approximately an hour to ensure appropriate hygienisation of the raw material in the third zone.

Figure 3 shows a hygienisation unit 10, which is meant for hygienisation of slurry used as the raw material . In this embodiment, the raw material is heated in two zones. Proportioned to the embodiment of Figure 2, these zones can be analogically named according to their functions as a first zone A and a third zone C. In the first zone A, raw material is heated to a desired temperature. After the first zone A, the stock temperature is measured with a first temperature sensor 28. In the third zone C, the temperature of the raw material is kept at 75°C for the desired hygienisation time. When the raw material is removed from the hygienisation process, the temperature is measured with a second temperature sensor 32. A fourth temperature sensor 44 can be used to monitor the temperature of the raw material in the middle of the third zone C. A fifth temperature sensor 46 can be used to measure the temperature of the incoming raw material before hygienisation. According to the embodiment of Figure 2, a sixth temperature sensor 48 can be used correspondingly to measure the temperature of the heat transfer fluid. In this context, the raw material can be, for example, agricultural waste, such as poultry manure or dairy cattle manure or other equivalent material.

According to Figure 2, the hygienisation unit 10 can also include, according to an embodiment, adjustment equipment for adjusting the ratio of nitrogen and carbon in raw material. The adjustment equipment can include at least one discharge connection 34 arranged in the pipe 20 for removing liquid from the raw material and vacuum equipment 36 for generating a vacuum in the discharge connection 34 for removing liquid and nitrogen contained therein from the raw material in vapour or liquid form. In addition, the adjustment equipment advantageously also includes a supply connection 52 arranged in the pipe 20 in the direction of motion of the raw material, before the discharge connection 34, for supplying a base into the pipe 20 to enhance separation of nitrogen. With the adjustment equipment, the ratio of nitrogen and carbon in the raw material can be adjusted suitable for the biogas reactor. The raw material must not contain too much nitrogen, because an excessive amount of nitrogen poisons microbes used in anaerobic digestion in the biogas reactor; on the other hand, however, nitrogen is needed to achieve the correct carbon/nitrogen ratio in the biogas reactor. The carbon/nitrogen ratio is significant for biogas production in a biogas reactor and the correct ratio can multiply the production by a factor of 2 to 4.

The adjustment equipment is advantageously used in such a way that a base, such as sodium hydroxide, is added into the raw material from the supply connection 52 in an amount of 0.01% - 0.10%, preferably 0.04% - 0.08%, of the raw material weight enabling in this way better dissolution of nitrogen in the liquid separated from the raw material as the raw material temperature increases. As the raw material advances up to the discharge connection 34, the liquid and nitrogen contained in it are separated by drawing a vacuum of 0.5 bar - 1.0 bar, preferably 0.7 bar - 0.8 bar, in this position of the pipe 20 through the discharge connection 34, the vacuum making the liquid vaporise at 70°C required by hygienisation. The vacuum can be generated with vacuum equipment, that is, a compressor, for example. In a vapour form, liquid can be more efficiently removed from the raw material in an easier way than in a liquid form, wherein the solid matter in the raw material would hinder the removal of the liquid. A vaporised nitrogen-containing liquid can be recovered and sold as nitrogen concentrate, for example, which can be used to manufacture organic fertilisers.

According to an embodiment, a second supply connection can also be included in the vicinity of the pipe 20 for feeding enzymes into the raw material. This enables the use of lignin-containing raw materials, such as straw, etc., as raw material for biogas production. Traditionally, lignin-containing raw materials, or biomasses, have not been well suitable as a raw material for biogas production, because lignin-containing biomasses result in low production of biogas via anaerobic digestion. The second supply connection is advantageously located towards the end of the first zone, where the temperature has achieved at least the value required by hygienisation. Enzymes require a sufficient temperature for efficient action. The temperature required by hygienisation is suitable as regards enzymatic action. The feed equipment used in the hygienisation unit is also sufficiently powerful to supply the pipe with biomass, which, thanks to lignin, has high rigidity and viscousness. For example, the laccase enzyme can be used to disintegrate lignin contained in the raw material into parts that produce biogas in the following way:

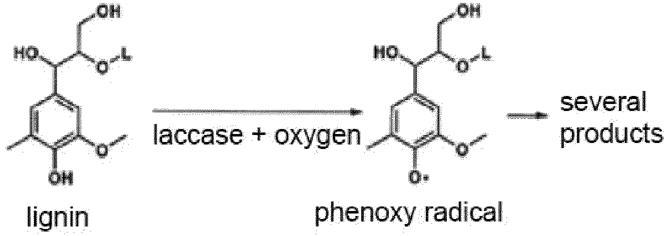

In this context, "several products" can mean, for example, biogas produced via anaerobic digestion and its derivatives.

Supply of enzymes through the second supply connection into the raw material in the pipe can be called "enzyme treatment". For the enzyme treatment, the pipe 20 advantageously also includes a second discharge connection 54, via which enzymes are removed with the liquid and are circulated back to the second supply connection. Advantageously, the second discharge connection 54 is located in the pipe 20 before the first discharge connection 34.

According to an alternative embodiment, the heating equipment can also consist of electric resistances arranged around a pipe for heating the pipe from the outside. Furthermore, induction heating can alternatively be used for heating the pipe, if the manufacturing material of the pipe is black iron at least for its outer surface.

According to an embodiment, the hygienisation unit can be used for heating an input in order to recover valuable fatty acids therefrom, which can be utilised, for example, as a raw material for biodiesel.

## Claims

1. A hygienisation unit for hygienising or pressure sterilising raw material that contains organic material and is fed to a biogas reactor, said hygienisation unit (10) being continuously operating and said hygienisation unit (10) including
- a delimited space (12) for a high solids content raw material, the delimited space (12) being a pressure resistant tortuous continuous pipe (20),
- feed equipment (14) arranged in the vicinity of the space (12) for feeding suppliable raw material to the space (12), the feed equipment (14) including a pump for feeding raw material, a gate valve (23) arranged between the pump (22) and the space (12) for preventing the return flow of raw material and a second gate valve (25) arranged at the end of the delimited space (12) in the direction of motion of raw material for closing the delimited space (12) to increase pressure,
- heating equipment (16) arranged outside the pipe (20) for heating raw material inside the pipe (20) by the effect of heat transferred through the pipe (20),
- measuring equipment (18) for measuring the temperature and pressure of the raw material existing in the space (12),
- control equipment (40) arranged to control said feed equipment (14) and heating equipment (16) for adjusting the raw material dwell time and the hygienisation temperature suitable in terms of the duration of hygienisation or pressure sterilisation for hygienising raw material based on the measurement of the measuring equipment (18), **characterised in that** the pump is a piston pump (22) arranged to supply raw material in a solids content of 15% - 35%, preferably 25% - 30%.

2. A hygienisation unit according to Claim 1, **characterised in that** the control equipment (40) is arranged to keep the temperature of the raw material in the delimited space (12) between 60°C and 160°C and pressure between 0.5 bar and 10 bar, preferably at 70°C at 1 bar pressure or at 133°C at 3 bar pressure.

3. A hygienisation unit according to Claim 1 or 2, **characterised in that** the measuring equipment (18) includes at least a first temperature sensor (28) for ensuring a sufficient raw material temperature between the ends (30) included in the pipe (20), and a second temperature sensor (32) for verifying the temperature of raw material discharged from the pipe (20).

4. A hygienisation unit according to any of Claims 1 to 3, **characterised in that** the hygienisation unit further includes control logics for timing the operation of the piston pump (22) and the gate valve (23) relative to each other.

5. A hygienisation unit according to any of Claims 1 to 4, **characterised in that** the diameter of said pipe (20) is in the range of 200 mm - 400 mm, preferably 250 mm - 300 mm, and the length is 20 m - 100 m, preferably 75 m - 85 m.

6. A hygienisation unit according to any of Claims 1 to 5, **characterised in that** the pipe (20) includes at least one discharge connection (34) for removing liquid from raw material and vacuum equipment (36) for generating a vacuum in the discharge connection (34) for removing liquid and nitrogen contained therein from the raw material as vapour.

7. A hygienisation unit according to Claim 6, **characterised in that** said vacuum is in the range of 0.5 bar -1.0 bar, preferably 0.7 bar - 0.8 bar.

8. A hygienisation unit according to any of Claims 1 to 7, **characterised in that** the heating equipment (16) includes several heat exchangers (38) arranged uniformly over the pipe (20) length.

9. A hygienisation unit according to Claims 1 to 8, **characterised in that** the heating equipment (16) covers 50% - 80% of the total length of the pipe (20).

10. A method for hygienising or pressure sterilising raw material fed to a biogas reactor in a hygienisation unit (10), wherein
- feeding raw material to a delimited space (12) with feed equipment (14) in continuous operation using a pump (22),
- preventing return flow of the raw material with a gate valve (23) arranged between the piston pump (22) and the delimited space (12),
- closing the delimited space (12) in direction of motion of the raw material in the end of the delimited space (12) for increasing pressure with a second gate valve (25),
- heating raw material in said delimited space (12) for increasing the raw material temperature with heating equipment (16) from the outside of the pipe (20) by transferring heat to the raw material through the pipe (20),
- measuring the temperature and pressure of raw material existing in the space (12) with measuring equipment (18),
- controlling the feed equipment (14) with control equipment (40) for adjusting the raw material dwell time sufficient in terms of the duration of hygienisation or sterilisation for hygienising the raw material based on the measurement of the measuring equipment (18),
- removing raw material from the delimited space (12) of the hygienisation unit (10) in continuous operation, characterised in that-the raw material fed to the delimited space (12) by using a piston pump (22) as the pump has a solids content of 15% - 35%, preferably 25% - 30%.

11. A method according to Claim 10, **characterised in that** a base is fed into the raw material for increasing the pH of the raw material to separate nitrogen from the raw material into the water, and nitrogen-containing water is aspirated from the pipe (20) by using a vacuum.

12. A method according to Claim 10 or 11, **characterised in that** the operation of the piston pump (22) and the gate valve (23) is controlled with a logic unit for timing the operation of the piston pump (22) and the gate valve (23) relative to each other.

13. A method according to any of Claims 10 to 12, **characterised in that** raw material is heated up to a temperature ranging between 60°C - 160°C, and pressure is increased to 0.5 bar - 10 bar, preferably to a temperature of 70°C and to a pressure of 1 bar or to a temperature of 133°C and at a pressure of 3 bar.

## Patentansprüche

1. Hygienisierungseinheit zur Hygienisierung oder Drucksterilisierung von Rohmaterial, das organisches Material enthält und einem Biogasreaktor zugeführt wird, wobei die Hygienisierungseinheit (10) kontinuierlich arbeitet und die Hygienisierungseinheit (10) einschließend
- einen abgegrenzten Raum (12) für ein Rohmaterial mit hohem Feststoffgehalt, wobei der abgegrenzte Raum (12) ein druckfestes, gewundenes, durchgehendes Rohr (20) ist,
- eine in der Nähe des Raums (12) angeordnete Zuführausrüstung (14) zum Zuführen von zuführbarem Rohmaterial in den Raum (12), wobei die Zufuhrausrüstung (14) eine Pumpe zum Zuführen von Rohmaterial, ein zwischen der Pumpe (22) und dem Raum (12) angeordnetes Absperrventil (23) zum Verhindern des Rückflusses von Rohmaterial und ein am Ende des abgegrenzten Raums (12) in der Bewegungsrichtung des Rohmaterials angeordnetes zweites Absperrventil (25) zum Schließen des abgegrenzten Raums (12) zur Druckerhöhung einschließt,
- eine außerhalb des Rohres (20) angeordnete Heizausrüstung (16) zum Erhitzen des Rohmaterials im Inneren des Rohres (20) durch die Wirkung der durch das Rohr (20) übertragenen Wärme,
- eine Messausrüstung (18) zum Messen der Temperatur und des Drucks des im Raum (12) vorhandenen Rohmaterials,
- eine Steuerausrüstung (40), die so angeordnet ist, dass sie die Zufuhrausrüstung (14) und die Heizausrüstung (16) steuert, um die Verweilzeit des Rohmaterials und die Hygienisierungstemperatur einzustellen, die in Bezug auf die Dauer der Hygienisierung oder Drucksterilisierung zur Hygienisierung des Rohmaterials basierend auf der Messung der Messausrüstung (18) geeignet ist, **dadurch gekennzeichnet, dass** die Pumpe eine Kolbenpumpe (22) ist, die so angeordnet ist, dass sie Rohmaterial mit einem Feststoffgehalt von 15 % - 35 %, vorzugsweise 25 % - 30 %, zuführt.

2. Hygienisierungseinheit nach Anspruch 1, **dadurch gekennzeichnet, dass** die Steuerausrüstung (40) so angeordnet ist, dass sie die Temperatur des Rohmaterials in dem abgegrenzten Raum (12) zwischen 60 °C und 160 °C und den Druck zwischen 0,5 bar und 10 bar, vorzugsweise bei 70 °C bei 1 bar Druck oder bei 133 °C bei 3 bar Druck hält.

3. Hygienisierungseinheit nach Anspruch 1 oder 2, **dadurch gekennzeichnet, dass** die Messausrüstung (18) mindestens einen ersten Temperatursensor (28) zur Sicherstellung einer ausreichenden Rohmaterialtemperatur zwischen den im Rohr (20) enthaltenen Enden (30) und einen zweiten Temperatursensor (32) zur Überprüfung der Temperatur des aus dem Rohr (20) ausgetragenen Rohmaterials einschließt.

4. Hygienisierungseinheit nach einem der Ansprüche 1 bis 3, **dadurch gekennzeichnet, dass** die Hygienisierungseinheit ferner eine Steuerlogik zur zeitlichen Abstimmung des Vorgangs der Kolbenpumpe (22) und des Schieberventils (23) relativ zueinander einschließt.

5. Hygienisierungseinheit nach einem der Ansprüche 1 bis 4, **dadurch gekennzeichnet, dass** der Durchmesser des Rohrs (20) im Bereich von 200 mm - 400 mm, vorzugsweise 250 mm - 300 mm, liegt und die Länge 20 m - 100 m, vorzugsweise 75 m - 85 m, beträgt.

6. Hygienisierungseinheit nach einem der Ansprüche 1 bis 5, **dadurch gekennzeichnet, dass** die Leitung (20) mindestens einen Auslassanschluss (34) zum Entfernen von Flüssigkeit aus dem Rohmaterial und eine Vakuumausrüstung (36) zum Erzeugen eines Vakuums in dem Auslassanschluss (34) zum Entfernen von Flüssigkeit und darin enthaltenem Stickstoff aus dem Rohmaterial als Dampf einschließt.

7. Hygienisierungseinheit nach Anspruch 6, **dadurch gekennzeichnet, dass** das Vakuum im Bereich von 0,5 bar - 1,0 bar, vorzugsweise 0,7 bar - 0,8 bar liegt.

8. Hygienisierungseinheit nach einem der Ansprüche 1 bis 7, **dadurch gekennzeichnet, dass** die Heizausrüstung (16) mehrere Wärmetauscher (38) einschließt, die gleichmäßig über die Länge der Leitung (20) angeordnet sind.

9. Hygienisierungseinheit nach einem der Ansprüche 1 bis 8, **dadurch gekennzeichnet, dass** die Heizausrüstung (16) 50 % - 80 % der Gesamtlänge des Rohrs (20) abdeckt.

10. Verfahren zur Hygienisierung oder Drucksterilisierung von Rohmaterial, das einem Biogasreaktor in einer Hygienisierungseinheit (10) zugeführt wird, wobei
- Zuführen von Rohmaterial in einen abgegrenzten Raum (12) mit einer Zufuhrausrüstung (14) im kontinuierlichen Vorgang unter Verwendung einer Pumpe (22),
- Verhindern des Rückflusses des Rohmaterials mit einem Absperrschieber (23), der zwischen der Kolbenpumpe (22) und dem abgegrenzten Raum (12) angeordnet ist,
- Schließen des abgegrenzten Raums (12) in Bewegungsrichtung des Rohmaterials am Ende des abgegrenzten Raums (12) zur Druckerhöhung mit einem zweiten Absperrschieber (25),
- Erhitzen des Rohmaterials in dem abgegrenzten Raum (12), um die Temperatur des Rohmaterials mit einer Heizausrüstung (16) von außerhalb des Rohrs (20) zu erhöhen, indem Wärme durch das Rohr (20) auf das Rohmaterial übertragen wird,
- Messen der Temperatur und des Drucks des in dem Raum (12) vorhandenen Rohmaterials mit einer Messausrüstung (18),
- Steuern der Zufuhrausrüstung (14) mit einer Steuerausrüstung (40) zum Einstellen der Verweilzeit des Rohmaterials, die in Bezug auf die Dauer der Hygienisierung oder Sterilisierung ausreichend ist, um das Rohmaterial basierend auf der Messung der Messausrüstung (18) zu hygienisieren,
- Entfernen von Rohmaterial aus dem abgegrenzten Raum (12) der Hygienisierungseinheit (10) im kontinuierlichen Vorgang, **dadurch gekennzeichnet, dass**-das dem abgegrenzten Raum (12) unter Verwendung einer Kolbenpumpe (22) als Pumpe zugeführte Rohmaterial einen Feststoffgehalt von 15 % - 35 %, vorzugsweise 25 % - 30 % aufweist.

11. Verfahren nach Anspruch 10, **dadurch gekennzeichnet, dass** dem Rohmaterial eine Base zugeführt wird, um den pH-Wert des Rohmaterials zu erhöhen und den Stickstoff aus dem Rohmaterial in das Wasser abzuscheiden, und dass das stickstoffhaltige Wasser mit Hilfe eines Vakuums aus dem Rohr (20) abgesaugt wird.

12. Verfahren nach Anspruch 10 oder 11, **dadurch gekennzeichnet, dass** der Vorgang der Kolbenpumpe (22) und des Schieberventils (23) mit einer Logikeinheit zur zeitlichen Abstimmung des Vorgangs der Kolbenpumpe (22) und des Schieberventils (23) relativ zueinander gesteuert wird.

13. Verfahren nach einem der Ansprüche 10 bis 12, **dadurch gekennzeichnet, dass** das Rohmaterial auf eine Temperatur zwischen 60 °C - 160 °C erhitzt und der Druck auf 0,5 bar - 10 bar, vorzugsweise auf eine Temperatur von 70 °C und einen Druck von 1 bar oder auf eine Temperatur von 133 °C und einen Druck von 3 bar erhöht wird.

## Revendications

1. Unité d'hygiénisation pour l'hygiénisation ou la stérilisation sous pression de matière première contenant de la matière organique qui est introduite dans un réacteur à biogaz, ladite unité d'hygiénisation (10) fonctionnant en continu et comprenant
- un espace délimité (12) pour une matière première à forte teneur en solides, l'espace délimité (12) étant un conduit continu tortueux résistant à la pression (20),
- des équipements d'introduction (14) disposés à proximité de l'espace (12) pour introduire dans l'espace (12) la matière première pouvant y être acheminée, les équipements d'introduction (14) comprenant une pompe pour introduire la matière première, un robinet à vanne (23) disposé entre la pompe (22) et l'espace (12) pour empêcher le retour de matière première et un deuxième robinet à vanne (25) disposé à l'extrémité de l'espace délimité (12) dans le sens de déplacement de la matière première pour fermer l'espace délimité (12) afin d'augmenter la pression,
- des équipements de chauffe (16) disposés à l'extérieur du conduit (20) pour chauffer la matière première à l'intérieur du tuyau (20) par transfert de chaleur à travers le conduit (20),
- des équipements de mesure (18) pour mesurer la température et la pression de la matière première se trouvant dans l'espace (12),
- des équipements de commande (40) destinés à contrôler lesdits équipements d'introduction (14) et équipements de chauffe (16) afin de régler le temps d'arrêt de la matière première et la température d'hygiénisation adaptés qui correspondent à la durée d'hygiénisation ou de stérilisation sous pression nécessaire pour l'hygiénisation de la matière première en fonction de la mesure obtenue par les équipements de mesure (18), **caractérisé en ce que** la pompe est une pompe à piston (22) destinée à fournir de la matière première dont la teneur en solides est comprise entre 15 % et 35 %, de préférence entre 25 % et 30 %.

2. Unité d'hygiénisation conformément à la revendication 1, **caractérisée en ce que** l'équipement de commande (40) permet de maintenir la température de la matière première dans l'espace délimité (12) entre 60 °C et 160 °C et la pression entre 0,5 bar et 10 bar, de préférence à une pression de 1 bar à 70 °C ou à une pression de 3 bar à 133 °C.

3. Unité d'hygiénisation conformément à la revendication 1 ou 2, **caractérisée en ce que** les équipements de mesure (18) comprennent au moins un premier capteur de température (28) pour garantir que la température de la matière première se trouvant entre les extrémités (30) du conduit (20) est suffisante, et un deuxième capteur de température (32) pour vérifier la température de la matière première sortant du conduit (20).

4. Unité d'hygiénisation conformément à l'une quelconque des revendications 1 à 3, **caractérisée en ce que** l'unité d'hygiénisation comprend également une logique de commande pour programmer le fonctionnement de la pompe à piston (22) et du robinet à vanne (23) l'un par rapport à l'autre.

5. Unité d'hygiénisation conformément à l'une quelconque des revendications 1 à 4, **caractérisée en ce que** le diamètre dudit conduit (20) est compris entre 200 mm et 400 mm, de préférence entre 250 mm et 300 mm, et sa longueur est comprise entre 20 m et 100 m, de préférence entre 75 m et 85 m.

6. Unité d'hygiénisation conformément à l'une quelconque des revendications 1 à 5, **caractérisée en ce que** le conduit (20) comprend au moins un raccord de refoulement (34) pour retirer le liquide de la matière première et des équipements de pression négative (36) pour créer une pression négative dans le raccord de refoulement (34) afin de retirer de la matière première le liquide et l'azote qui s'y trouvent en tant que vapeur.

7. Unité d'hygiénisation conformément à la revendication 6, **caractérisée en ce que** ladite pression négative est comprise entre 0,5 bar et 1,0 bar, de préférence entre 0,7 bar et 0,8 bar.

8. Unité d'hygiénisation conformément à l'une quelconque des revendications 1 à 7, **caractérisée en ce que** les équipements de chauffe (16) comprennent plusieurs échangeurs thermiques (38) disposés de manière uniforme sur toute la longueur du conduit (20) .

9. Unité d'hygiénisation conformément à l'une quelconque des revendications 1 à 8, **caractérisée en ce que** les équipements de chauffe (16) couvrent 50 % à 80 % de la longueur totale du conduit (20).

10. Procédé d'hygiénisation ou de stérilisation sous pression de matière première introduite dans un réacteur à biogaz dans une unité d'hygiénisation (10), dans lequel
- de la matière première est introduite dans un espace délimité (12) au moyen d'équipements d'introduction (14) fonctionnant en continu à l'aide d'une pompe (22),
- un robinet à vanne (23) disposé entre la pompe à piston (22) et l'espace délimité (12) empêche le retour de la matière première,
- l'espace délimité (12) est fermé dans le sens de déplacement de la matière première à l'extrémité de l'espace délimité (12) pour augmenter la pression avec un deuxième robinet à vanne (25),
- la matière première est chauffée dans ledit espace délimité (12) pour augmenter la température de la matière première avec des équipements de chauffe (16) situés à l'extérieur du conduit (20) par transfert de chaleur à lamatière première à travers le conduit (20),
- la température et la pression de la matière première se trouvant dans l'espace (12) sont mesurées par des équipements de mesure (18),
- les équipements d'introduction (14) sont contrôlés par les équipements de commande (40) afin de régler le temps d'arrêt suffisant de la matière première qui correspond à la durée d'hygiénisation ou de stérilisation nécessaire pour l'hygiénisation de la matière première en fonction de la mesure obtenue par les équipements de mesure (18),
- la matière première est retirée de l'espace délimité (12) de l'unité d'hygiénisation (10) en fonctionnement continu, **caractérisé** en ce-que la matière première introduite dans l'espace délimité (12) au moyen de la pompe à piston (22) a une teneur en solides comprise entre 15 % et 35 %, de préférence entre 25 % et 30 %.

11. Procédé conformément à la revendication 10, **caractérisé en ce qu'**une base est introduite dans la matière première pour augmenter son pH afin de séparer l'azote de la matière première dans l'eau, et l'eau contenant de l'azote est aspirée du conduit (20) à l'aide d'une pression négative.

12. Procédé conformément à la revendication 10 ou 11, **caractérisé en ce que** le fonctionnement de la pompe à piston (22) et du robinet à vanne (23) est contrôlé par une unité logique pour programmer le fonctionnement de la pompe à piston (22) et du robinet à vanne (23) l'un par rapport à l'autre.

13. Procédé conformément à l'une quelconque des revendications 10 à 12, **caractérisé en ce que** la matière première est chauffée jusqu'à une température comprise entre 60 °C et 160 °C, et la pression est augmentée jusqu'à une fourchette comprise entre 0,5 bar et 10 bar, de préférence jusqu'à une température de 70 °C et une pression de 1 bar ou jusqu'à une température de 133 °C et une pression de 3 bar.
